## Europäisches Patentamt

## European Patent Office

## Office européen des brevets

(11) Publication number: **0 028 540**
**B1**

(12) **EUROPEAN PATENT SPECIFICATION**

(45) Date of publication of patent specification: **09.11.83**

(21) Application number: **80303953.6**

(22) Date of filing: **06.11.80**

(51) Int. Cl.³: **G 01 N 29/00,**
**G 01 K 11/24**

(54) **Method and apparatus for non-contact acoustic measurement of physical properties of continuously moving metal strip.**

(30) Priority: **06.11.79 GB 7938421**

(43) Date of publication of application:
**13.05.81 Bulletin 81/19**

(45) Publication of the grant of the patent:
**09.11.83 Bulletin 83/45**

(84) Designated Contracting States:
**BE DE FR SE**

(56) References cited:
**DE - A - 2 319 767**
**DE - A - 2 617 958**
**US - A - 3 534 609**
**US - A - 3 720 098**

(73) Proprietor: **THE ELECTRICITY COUNCIL**
**30 Millbank**
**London, SW1P 4RD (GB)**

(72) Inventor: **Moorey, Ernest James**
**6 Farbailey Close**
**Chester CH4 7QH (GB)**

(74) Representative: **Rennie, Ian Malcolm et al,**
**BOULT, WADE & TENNANT 27 Furnival Street**
**London EC4A 1PQ (GB)**

Courier Press, Leamington Spa, England.

Method and apparatus for non-contact acoustic measurement of physical
properties of continuously moving metal strip

This invention relates to methods of and
apparatus for the measurement of physical
properties of continuously moving metal strip
without making physical contact with the
moving strip.

As will be apparent from the following
description, the technique of the present
invention essentially makes a measurement of
the velocity of an acoustic wave in the solid.
This velocity is related to the Young's modulus
of the material. The technique therefore may be
used for measuring the Young's modulus. More
widely however there are other physical properties of a material which can be determined from
knowledge of the Young's modulus. In particular the Young's modulus varies with temperature and determination of Young's modulus
enables the temperature of the material to be
determined.

In U.S. Application No. 3720098 there is disclosed a method of determining a parameter
representative of a physical property of a
sample comprising the steps of generating an
acoustical shock wave, containing ultrasonic
frequencies, near one location on the surface of
the sample and measuring the velocity of
propagation of the shock wave through the
material of the sample by determining the time
of propagation between second and third
locations on the sample by measurement of the
time of arrival of the acoustic shock wave at
each of said second and third locations.

According to one aspect of the present
invention a method of determining a parameter
representative of a physical property of a
sample comprises the steps of generating an
acoustical shock wave, containing ultrasonic
frequencies, near one location on the surface of
the sample and measuring the velocity of
propagation of the shock wave through the
material of the sample by determining the time
of propagation between second and third
locations on the sample by measurement of the
time of arrival of the acoustic shock wave at
each of said second and third locations is
characterised in that the sample is a continuously moving metal strip and in that, for
each of said second and third locations, two
microphones near but not in contact with
opposite faces of the strip are used and in that,
from the arrival times at the four microphones,
a parameter is determined proportional to the
difference between the average time of receipt
of the acoustic wave at the two microphones at
the second location and the average time of
receipt of the acoustic wave at the two microphones at the third location. This velocity of
propagation V is given by the expression

$$V = \sqrt{\frac{E}{2(1+\sigma)\rho}}$$

where
  E is Young's modulus
  $\sigma$ is Poisson's ratio, and
  $\rho$ is the relative density.

For most materials it can be assumed that
Poisson's ratio and the relative density will
remain constant over the range of conditions for
which measurements are to be made. The
velocity of transmission is thus proportional to
the square root of Young's modulus. Young's
modulus is temperature-dependent and thus,
other things being equal, measurement of the
velocity of transmission enables the temperature of the material to be determined.
Commonly, for any given system, the relationship between velocity of transmission and temperature can be determined empirically so that
measurement apparatus can be calibrated.

The present invention provides a method of
and apparatus for measurement on a moving
metal strip, without physical contact with the
strip, enabling a parameter such as Young's
modulus to be determined despite movements
of the strip transverse to its general plane. In
the heat treatment of metals, for example in the
treatment of continuous strip material, noncontact measurement of Young's modulus of a
strip as it is being treated enables the state of
annealing of the strip to be determined. The
technique of the present invention leads to the
possibility of monitoring the state of annealing
of metal strip as the material is being treated.

This technique enables measurement to be
made of a physical parameter of metal strip
which is being processed. In such strip, the
shock waves generated near one surface will be
propagated along the length or across the width
of the strip. It is readily possible to determine
the time of arrival of a shock wave at distant
points by means of microphones. Because the
strip, in practical cases, often is moving transversely to its plane, two microphones adjacent
opposite faces of the strip are used so that if the
strip moves towards one microphone it moves
away from the other. The average time of arrival
of the impulse at the two microphones gives a
mean time corresponding to that if the strip
remained midway between the two microphones. Two such pairs of microphones are
used, the two pairs being spaced apart so
enabling the velocity of propagation between
the two pairs to be determined. This removes
any possible errors due to changes in the distance between the shock wave generator and
the strip.

The shock wave contains ultrasonic frequencies and is conveniently produced by a
short duration pulse having a rapid rise time,
e.g. about 2 microseconds. Such a shock wave
may be produced by an electric spark adjacent
the material under test. Preferably the shock
wave comprises a short duration pulse of ultrasonic energy. The electric spark may conveniently be arranged to produce regularly repetitive pulses.

According to another aspect of the invention, apparatus for determining a parameter representative of a physical property of a sample comprises a shock wave generator near one surface of the sample at one location for generating a shock wave containing ultrasonic frequencies and means for measuring the velocity of propagation of the resultant shock wave in the sample by measurement of the times of receipt of the shock wave at acoustic signal receivers at each of second and third locations spaced along the sample is characterised in that the sample is a continuously moving metal strip and in that, at each of the second and third locations, two acoustic signal receivers are provided near the strip but on opposite faces thereof and in that means are provided responsive to the difference between the average time of receipt of the shock wave at the two receivers at the second location and the average time of receipt at the two receivers at the third location for determining the velocity of propagation of the acoustic wave signal between the second and third locations in the strip under test.

As indicated above, the shock wave generator conveniently comprises an electric circuit arranged to provide a short duration pressure pulse signal from a spark discharge. This pulse signal has a short rise time and thus contains ultrasonic energy. A collimator may be provided between the shock wave generator and said material to direct the shock wave onto a selected surface region of the material.

The receivers may each comprise a microphone near a surface of the material. It may be preferred to use directional microphones (e.g. a small ultrasonic receiver at the focus of a parabolic reflector or to provide a suitable collimator between the material and each microphone.

In the following description, reference will be made to the accompanying drawings in which:—

Figure 1 shows diagrammatically. one method of determining a parameter representative of a physical property of a moving metal strip;

Figure 2 shows in further detail part of the apparatus used in carrying out the method illustrated in Figure 1; and

Figure 3 is an explanatory diagram.

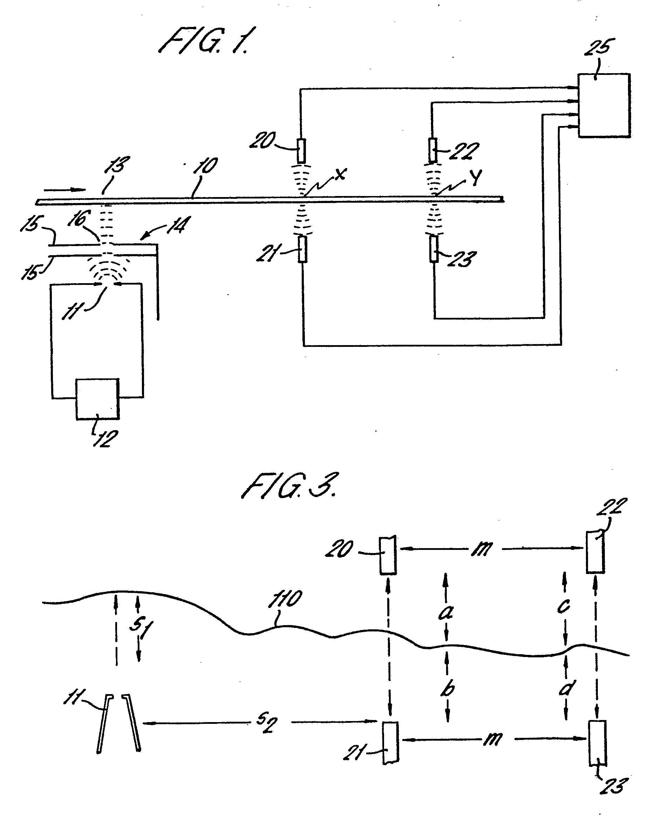

Referring to Figure 1 there is shown diagrammatically in side elevation a moving strip 10 of hot metal, for example a strip of sheet material which has been subjected to a heat treatment process such as annealing. Adjacent to this strip, an electric spark gap 11 is repetitively energised from a source 12 to produce a series of acoustic impulses, at a frequency, for example, of 50 Hz, which impinge on the strip at 13. The arc discharge across the gap has a very short voltage rise time, e.g. about 2 microseconds, and this will generate most of its energy as ultrasonic signals in the 100 kHz region. A collimator 14 may be provided to limit the area of the strip on which the ultrasonic impulses impinge. If such a collimator 14 is required, it may conveniently take the form of a series of plates 15, each having an aperture 16, the apertures being aligned to form the required path for the shock wave. Remote from the point 13 are a first pair of directional microphones 20, 21 directed towards opposite faces of the strip at a point X. Adjacent another point Y, spaced along the strip remote from X are a second pair of microphones 22, 23 also directed towards opposite faces of the strip. These microphones 20 to 23 are designed to be sensitive at the ultrasonic frequencies, around 100 kHz, produced by the arc discharges and are connected to tuned receivers and data processing unit 25 which will be described in further detail later and which determines the difference between mean time of receipt of an impulse at X (the average of the times of receipt at the two microphones 20, 21) and the mean time of receipt of the same impulse at Y (the average of the time of receipt at the microphones 22, 23). The difference between these mean times is the time interval taken for the shock wave to travel from X to Y. The velocity of the acoustic wave in the material depends on Young's modulus, Poisson's ratio and the relative density. Young's modulus is temperature-dependent and it is readily possible to calibrate empirically the output of the receiver and data processor in terms of the temperature of the strip in the region between X and Y. If the metal strip is being annealed, the magnitude of Young's modulus may depend on the proper annealing of the strip, which will depend on the correct temperature of treatment and the output of the receiver and data processor 25 may be utilised as an overall check on the annealing process to which the strip has been subjected.

By utilising pairs of receiving microphones 20, 21 and 22, 23 the two microphones in each pair being located near opposite faces of the strip, and averaging the time of receipt of the shock wave at the two microphones of the pair, the apparatus can function satisfactorily despite transverse movements of the strip, that is to say movements towards one microphone and away from the other in a pair. It is thus possible to utilise this form of testing apparatus as a noncontact monitor of temperature or other physical properties of a metal strip which is moving at high speed and which therefore may be subject to oscillation in directions normal to the plane of the strip.

Preferably directional microphones are employed to ensure pick-up of the acoustic waves from a localised area of the strip. The microphones and receiver may be arranged to operate preferentially at a desired frequency, for example to receive ultrasonic radiation, preferably with a high-pass filter to cut out noise.

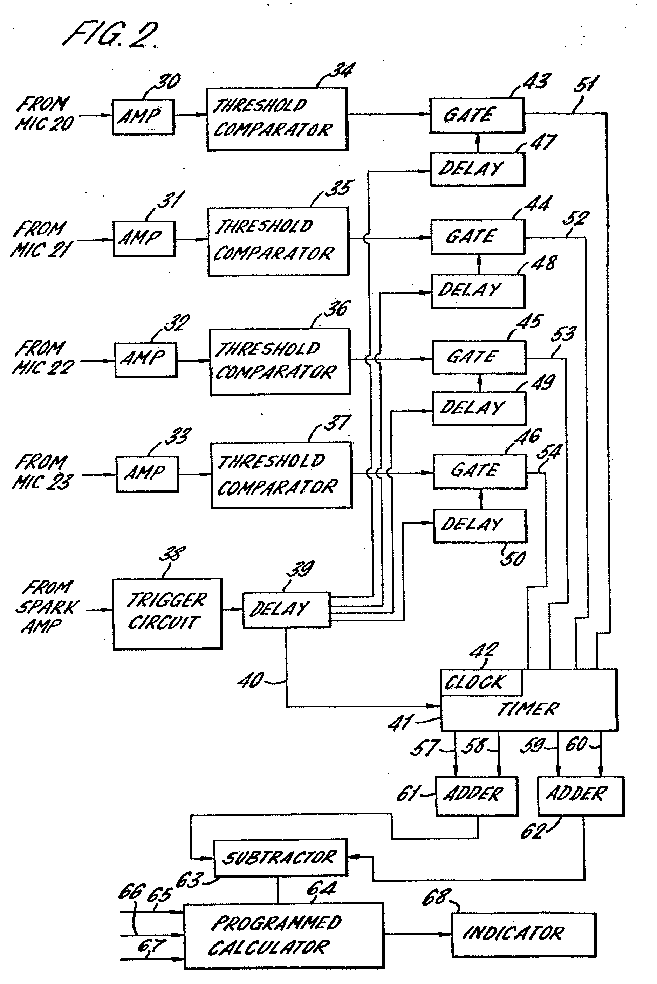

The unit 25 is shown in further detail in Figure 2. The inputs from the four microphones 20, 21, 22, 23 are fed respectively to four tuned amplifiers 30, 31, 32, 33 which amplify and filter the signals of around 100 kHz and give detected outputs. These outputs are passed to respective threshold comparators 34, 35, 36, 37 which cut off the lower level part of the signal, which is primarily noise. The signal from the spark gap, as an electric pulse from the generator 12 is applied to a trigger circuit 38 which is essentially a waveform generator. The output from this trigger circuit, after passing through a delay 39 provides a first output on a lead 40 for starting an electronic timer 41 counting clock pulses from a clock 42. The output from the delay circuit 39 is also used to open gates 43, 44, 45, 46 for admitting the outputs from the comparators to the timer 41. These gates have respective associated delays 47, 48, 49, 50. The various delays conveniently are digital counters and they are such that the gates open only at the appropriate times after the spark gap has been energised in order to reduce interference in the timer from any spurious signals which might be picked up by the microphones. The gated received signals are fed to the timer 41 on leads 51, 52, 53, 54. The timer 41 determines the times of arrival (measured from the time of spark discharge) at each of the four microphones and gives these outputs, in digital form on four leads 57, 58, 59, 60 (corresponding respectively to the times at microphones 20, 21, 22, 23). The outputs on leads 57, 58 are applied to an adder 61 and the outputs on leads 59, 60 are applied to another adder 62. The summed output of adder 61 is subtracted from that of adder 62 in a subtractor 63 to give a parameter proportional to the difference between the average time of receipt of the signal at the location of microphones 20, 21 and the average time of receipt of the signal at the location of microphones 22, 23. This mean transit time parameter is fed to a programmed calculator 64 having inputs of m, $\sigma$ and $\rho$ on leads 65, 66, 67 respectively and which determines Young's modulus E indicated on an indicator 68.

Mechanical movement of the strip may generate acoustic waves but these would be low frequency signals outside the filtered frequency range. The arrangement described above compensates for any changes in distance from the microphones due to transverse movement of the strip. Referring to Figure 3, the instantaneous position of the strip is shown at 110, with exaggerated transverse displacements. The time taken for a signal to travel from the spark to a microphone is measured by the circuit just described. The signal travels to the microphone 20—23 from spark 11. The measurement time is of the order of microseconds and so compared to the speed of the signal at the moment of measurement, the strip appears to be stationary. By the time the signal is measured again (next d.c. pulse) about 20 ms will have elapsed and the strip will have moved, i.e. the strip moves position between successive signal pulses but its movement is too slow to have any effect during a single pulse. Since all measurements are taken during a single pulse, the strip movement can be ignored.

Assume the four microphones 20, 21, 22, and 23 are respectively at distances a, b, c and d from the strip at the moment of measurement. The arc is a distance $s_1$ from the strip and $s_2$ from the nearest microphone, and the microphones 20, 21, 22, 23 are a distance, m, apart. The spark signal takes a time ta to reach microphone 20, tb to reach 21, tc to reach 22 and td to reach 23. So in time ta the signal travels a distance $(s_1+s_2+a)$ and in time tb, it travels $(s_1+s_2+b)$ and so on. Thus the time (ta+tb) is proportional to

$$2(s_1+s_2)+(a+b).$$

Similarly the signals travel to 23 in time tc through a distance $(s_1+s_2+m+c)$. So (tc+td) is proportional to

$2(s_1+s_2+m)+(c+d)$. By subtracting (ta+tb) from (tc+td), we have

$$\{2(s_1+s_2+m)-2(s_1+s_2)-(a+b)+(c+d)\}$$

as the total distance travelled in time (tc+td)—(ta+tb). The microphones are in fixed positions so that (a+b) is the same distance as (c+d). Thus the total distance travelled is simply 2 m, i.e. twice the distance between the fixed microphones and independent of the strip movement.

The timer 41 gives four time signals, ta, tb, tc, td, which are then combined to determine (tc+td)—(ta+tb) and the resultant time, T, is related to the distance between the microphones, m, by the equation,

$$V = \frac{2m}{T}$$

where V is the ultrasonic velocity in the strip.

Young's modulus is obtained from this from the equation:

$$V = \left(\frac{E}{2(1+\sigma)\rho}\right)^{\frac{1}{2}}$$

where

E is Young's modulus

$\sigma$ is Poisson's ratio

$\rho$ is strip relative density.

## Claims

1. A method of determining a parameter representative of a physical property of a sample comprising the steps of generating an acoustical shock wave, containing ultrasonic frequencies, near one location on the surface of the sample and measuring the velocity of propagation of the shock wave through the material of the sample by determining the time of propagation between second and third locations on the sample by measurement of the time of arrival of the acoustic shock wave at each of said second and third locations characterised in that the sample is a continuously moving metal strip (10) and in that, for each of said second and third locations, two microphones (20, 21 and 22, 23) near but not in contact with opposite faces of the strip (10) are used and in that, from the arrival times at the four microphones, a parameter is determined proportional to the difference between the average time of receipt of the acoustic wave at the two microphones (20, 21) at the second location and the average time of receipt of the acoustic wave at the two microphones (22, 23) at the third location.

2. A method as claimed in claim 1 characterised in that said acoustical shock wave is generated by a spark discharge.

3. Apparatus for determining a parameter representative of a physical property of a sample comprising a shock wave generator near one surface of the sample at one location for generating a shock wave containing ultrasonic frequencies and means for measuring the velocity of propagation of the resultant shock wave in the sample by measurement of the times of receipt of the shock wave at acoustic signal receivers at each of second and third locations spaced along the sample characterised in that the sample is a continuously moving metal strip (10) and in that, at each of the second and third locations, two acoustic signal receivers (20, 21 and 22, 23) are provided near the strip (10) but on opposite faces thereof and in that means (25) are provided responsive to the difference between the average time of receipt of the shock wave at the two receivers (20, 21) at the second location and the average time of receipt at the two receivers (22, 23) at the third location for determining the velocity of propagation of the acoustic wave signal between the second and third locations in the strip (10) under test.

4. Apparatus as claimed in claim 3 characterised in that the shock wave generator comprises means (11, 12) producing an electric spark to provide a short duration pulse signal.

5. Apparatus as claimed in claim 4 characterised in that the shock wave generator (11, 12) is arranged to provide repetitive sparks giving repetitive short duration pulse signals.

6. Apparatus as claimed in any of claims 3 to 5 and having a collimator (14) between the shock wave generator (11, 12) and said material (10) to direct the shock wave onto a selected surface region of the material.

7. Apparatus as claimed in any of claims 3 to 6 characterised in that each receiver (20, 21, 22, 23) is a microphone near the surface of the material.

8. Apparatus as claimed in claim 7 characterised in that the microphone is a directional microphone.

9. Apparatus as claimed in claim 7 characterised in that a collimator is provided between the material and the microphone.

10. Apparatus as claimed in any of claims 3 to 9 and having a counter (41) for determining the time of receipt of signals at the various microphones measured from the operation of the shock wave generator (11, 12).

11. Apparatus as claimed in claim 10 characterised in that gating circuits (43—50) are provided for controlling the application of signals to said counter (41), said gating circuits (43—50) include delays (47—50) so that they are open for predetermined periods after the operation of the shock wave generator (11, 12).

## Revendications

1. Procédé de détermination d un paramètre représentatif d une propriété physique d'un échantillon, comprenant les opérations consistant à générer une onde de choc acoustique, contenant des fréquences ultra-sonores, près d'un premier emplacement entre la surface de l'échantillon et à mesurer la vitesse de propagation de l onde de choc à travers le matériau de l échantillon en déterminant le temps de propagation entre des deuxième et troisième emplacements sur l échantillon par une mesure des instants d'arrivée de l'onde de choc acoustique à chacun desdits deuxième et troisième emplacements, ledit procédé étant caractérisé en ce que l'échantillon est une bande métallique continuellement en mouvement (10), et en ce que, pour chacun desdits deuxième et troisième emplacements, on utilise deux microphones (20, 21 et 22, 23) près des faces opposées de la bande (10) mais non en contact avec celle-ci, et encore en ce que d'après les instants d'arrivée aux quatre microphones, on détermine un paramètre proportionnel à la différence entre l instant moyen de réception de l'onde acoustique aux deux microphones (20, 21) au deuxième emplacement et l'instant moyen de réception de l'onde acoustique aux deux microphones (22, 23) au troisième emplacement.

2. Procédé tel que revendiqué dans la revendication 1, caractérisé en ce que ladite onde de choc acoustique est engendrée par une décharge disruptive.

3. Appareil pour déterminer un paramètre représentatif d'une propriété physique d'un échantillon, comprenant un générateur d'onde de choc voisine d'une des surfaces de l'échantillon à un premier emplacement, pour engendrer une onde de choc contenant des fréquences ultra-sonores, et des moyens pour mesurer la vitesse de propagation de l'onde de choc résultante dans l'échantillon par une mesure des instants de réception de l'onde de choc à des récepteurs de signal acoustique à chacun de deuxième et troisième emplacements espacés le long de l'échantillon, ledit appareil étant caractérisé en ce que l échantillon est une bande métallique continuellement en mouvement (10), et en ce qu'à chacun des second et troisième emplacements, deux récepteurs de signal acoustique (20, 21 et 22, 23) sont prévus près de la bande (10) mais sur des faces opposées de celle-ci, et encore en ce qu'il est prévu des moyens (25) capables, en réponse à la différence entre l'instant moyen de réception de l'onde de choc aux deux récepteurs (20, 21) au deuxième emplacement et l'instant moyen de réception aux deux récepteurs (22, 23) au troisième emplacement, de déterminer la vitesse de propagation du signal d'onde acoustique entre les deuxième et troisième emplacements dans la bande (10) testée.

4. Appareil tel que revendiqué dans la revendication 3, caractérisé en ce que le générateur d'onde de choc comprend des moyens (11, 12) produisant une étincelle électrique pour engendrer un signal pulsé de courte durée.

5. Appareil tel que revendiqué dans la revendication 4, caractérisé en ce que le générateur d'onde de choc (11, 12) est agencé de manière à produire des étincelles répétitives engendrant des signaux pulsés répétitifs de courte durée.

6. Appareil tel que revendiqué dans l'une quelconque des revendications 3 à 5, et comportant un collimateur (14) entre le générateur d'onde de choc (11, 12) et ledit matériau (10) pour diriger l'onde de choc jusque sur une région de surface choisie de matériau.

7. Appareil tel que revendiqué dans l'une quelconque des revendications 3 à 6, caractérisé en ce que chacun des récepteurs (20, 21, 22, 23) est un microphone voisin de la surface du matériau.

8. Appareil tel que revendiqué dans la revendication 7, caractérisé en ce que le microphone est un microphone directionnel.

9. Appareil tel que revendiqué dans la revendication 7, caractérisé en ce qu'un collimateur est prévu entre le matériau et le microphone.

10. Appareil tel que revendiqué dans l'une quelconque des revendications 3 à 9 et comportant un compteur (41) pour déterminer l'instant de réception de signaux aux divers microphones mesuré à partir du moment de fonctionnement du générateur d'onde choc (11, 12).

11. Appareil tel que revendiqué dans la revendication 10, caractérisé en ce que des circuits de transmission conditionnée (43—50) sont prévus pour commander l'application de signaux audit compteur (41), lesdits circuits de transmission conditionnée (43—50) comprenant des dispositifs à retard (47—50) de façon qu'ils soient ouverts pendant des périodes prédéterminées après le moment de fonctionnement du générateur d'onde de choc (11, 12).

**Patentansprüche**

1. Verfahren zum Bestimmen eines Parameters, der eine physikalische Eigenschaft eines Prüfkörpers wiedergibt, welches Verfahren die Schritte der Erzeugung einer akustischen Stosswelle, die Ultraschallfrequenzen enthält, in der Nähe einer Stelle auf der Oberfläche des Prüfkörpers und die Messung der Fortpflanzungsgeschwindigkeit der Stosswelle durch das Material des Prüfkörpers umfasst, indem die Fortpflanzungszeit zwischen einer zweiten und einer dritten Stelle am Prüfkörper über eine Messung der Ankunftszeit der akustischen Stosswelle sowohl an der zweiten als auch an der dritten Stelle bestimmt wird, dadurch gekennzeichnet, dass der Prüfkörper ein sich fortlaufend bewegendes Metallband (10) ist und dass sowohl für die zweite als auch für die dritte Stelle zwei Mikrophone (20, 21 und 22, 23) nahe an, jedoch nicht in Kontakt mit den gegenüberliegenden Aussenflächen des Bandes (10) benutzt werden, und dass aus den Ankunftszeiten an den vier Mikrophonen ein Parameter bestimmt wird, der proportional zum Unterschied zwischen der mittleren Empfangszeit der akustischen Welle an den beiden Mikrophonen (20, 21) an der zweiten Stelle und der mittleren Empfangszeit der akustischen Welle an den beiden Mikrophonen (22, 23) an der dritten Stelle ist.

2. Verfahren nach Anspruch 1, dadurch gekennzeichnet, dass die akustische Stosswelle über eine Funkenentladung erzeugt wird.

3. Vorrichtung zum Bestimmen eines Parameters, der eine physikalische Eigenschaft eines Prüfkörper wiedergibt, mit einem Stosswellengenerator an einer Stelle in der Nähe einer Aussenfläche des Prüfkörpers zum Erzeugen einer Stosswelle, die Ultraschallfrequenzen enthält, und mit einer Einrichtung zum Messen der Fortpflanzungsgeschwindigkeit der resultierenden Stosswelle im Prüfkörper über eine Messung der Empfangszeit der Stosswelle an akustischen Signalempfängern sowohl an einer zweiten als auch an einer dritten Stelle, die längs des Prüfkörpers beabstandet sind, dadurch gekennzeichnet, dass der Prüfkörper ein sich fortlaufend bewegendes Metallband (10) ist, und dass sowohl an der zweiten als auch an der dritten Stelle zwei akustische Signalempfänger (20, 21 und 22, 23) in der Nähe des Bandes (10), jedoch an dessen gegenüberliegenden Aussenflächen vorgesehen sind und dass Einrichtungen (25) vorgesehen sind, die auf den Unterschied zwischen der mittleren Empfangszeit der Stosswelle an den beiden Empfängern (20, 21) an der zweiten Stelle und der mittleren Empfangszeit an den beiden Empfängers (22, 23) an der dritten Stelle ansprechen, um die Fortpflanzungsgeschwindigkeit des akustischen Wellensignales zwischen der zweiten und der dritten Stelle in dem sich in der Prüfung befindenden Band (10) zu bestimmen.

4. Vorrichtung nach Anspruch 3, dadurch gekennzeichnet, dass der Stosswellengenerator Einrichtungen (11, 12) umfasst, die einen elektrischen Funken erzeugen, um ein Impulssignal mit kurzer Dauer zu liefern.

5. Vorrichtung nach Anspruch 4, dadurch gekennzeichnet, dass der Stosswellengenerator (11, 12) so ausgebildet ist, dass er sich wiederholende Funken erzeugt, die sich wiederholende Impulssignale mit kurzer Dauer ergeben.

6. Vorrichtung nach einem der Ansprüche 3 bis 5 und mit einem Kollimator (14) zwischen dem Stosswellengenerator (11, 12) und dem Material (10), um die Stosswelle auf einen gewählten Oberflächenbereich des Materials zu richten.

7. Vorrichtung nach einem der Ansprüche 3 bis 6, dadurch gekennzeichnet, dass jeder Empfänger (20, 21, 22, 23) ein Mikrophon in der Nähe der Oberfläche des Materials ist.

8. Vorrichtung nach Anspruch 7, dadurch gekennzeichnet, dass das Mikrophon ein Richtmikrophon ist.

9. Vorrichtung nach Anspruch 7, dadurch gekennzeichnet, dass ein Kollimator zwischen dem Material und dem Mikrophon vorgesehen ist.

10. Vorrichtung nach einem der Ansprüche 3 bis 9 und mit einem Zähler (41) zum Bestimmen der Empfangszeit der Signale an den verschiedenen Mikrophonen, gemessen von der Arbeit des Stosswellengenerators (11, 12).

11. Vorrichtung nach Anspruch 10, dadurch gekennzeichnet, dass Torschaltungen (43—50) vorgesehen sind, um das Anlegen der Signale an den Zähler (41) zu steuern, wobei die Torschaltungen (43—50) Verzögerungsglieder (47—50) enthalten, so dass sie für bestimmte Zeitintervalle nach der Arbeit des Stosswellengenerators (11, 12) offen sind.

FIG. 1.

FIG. 3.

FIG. 2.

0 028 540